**Europäisches Patentamt**

**European Patent Office**

**Office européen des brevets**

(19)

(11) Veröffentlichungsnummer: **0 237 026**
**A1**

(12) **EUROPÄISCHE PATENTANMELDUNG**

(21) Anmeldenummer: **87103428.6**

(22) Anmeldetag: **10.03.87**

(51) Int. Cl.³: **B 65 H 31/20**
**B 65 H 31/22**

(30) Priorität: **11.03.86 DE 8606703 U**

(43) Veröffentlichungstag der Anmeldung:
**16.09.87 Patentblatt 87/38**

(84) Benannte Vertragsstaaten:
**AT BE CH DE ES FR GB IT LI NL SE**

(71) Anmelder: **COMPUTER GESELLSCHAFT KONSTANZ MBH**
**Max-Stromeyer-Strasse 116**
**D-7750 Konstanz(DE)**

(72) Erfinder: **Koutoudis, Konstantin,Dipl.-Ing.(FH)**
**Silvanerweg 3,**
**D-7750 Konstanz(DE)**

(72) Erfinder: **Reisacher, Günter, Dipl.-Ing.(FH)**
**Felchengang 17,**
**D-7750 Konstanz(DE)**

(72) Erfinder: **Wurster, Dieter, Dipl.-Ing.(FH)**
**Seestrasse 73,**
**D-7760 Radolfszell(DE)**

(72) Erfinder: **Münscher, Wolfgang**
**Schurrweg 18**
**D-8000 München 60(DE)**

(74) Vertreter: **Mehl, Ernst, Dipl.-Ing. et al,**
**Postfach 22 01 76**
**D-8000 München 22(DE)**

(54) **Belegverarbeitungseinrichtung für Belege unterschiedlichen Formats.**

(57) Die Belegverarbeitungseinrichtung enthält einen Eingabetisch und wenigstens zwei unterhalb des Eingabefaches angeordnete Ausgabefächer. Sowohl der Eingabetisch (2) als auch die Ausgabefächer (3, 4) weisen an der dem seitlichen Anschlag (5) gegenüberliegenden Längskante je eine wenigstens bis in die Tisch- bzw. Fachmitte reichende Aussparung (6, 7, 8) auf, die als Sicht- und Grifföffnung dient.

Computer Gesellschaft
Konstanz
Max-Stromeyer-Str. 116
7750  Konstanz

Unser Zeichen
VPA 86 P 5004 E

Belegverarbeitungseinrichtung für Belege unterschiedlichen Formats.

DieErfindung betrifft eine Belegverarbeitungseinrichtung für Belege unterschiedlichen Formats nach dem Oberbegriff des Anspruchs 1.

Angesichts der Vielfalt von Belegformaten und Beleggrössen sind Belegverarbeitungseinrichtungen, beispielsweise Formularlesegeräte vielfach bereits so universell konzipiert, daß eine Verarbeitung unterschiedlicher Belege ohne besondere Vorkehrungen problemlos durchführbar ist. Insbesondere die Ein- und Ausgabefächer sind zweckmäßig so gestaltet, daß sie durch leicht verstellbare Anschläge an unterschiedliche Beleggrößen angepaßt werden können.

Der vorliegenden Erfindung liegt nun die Aufgabe zugrunde, die Ein- und Ausgabefächer von Belegverarbeitungseinrichtungen unabhängig von der jeweils verwendeten Beleggröße möglichst bedienungsfreundlich zu gestalten.

Die Lösung dieser Aufgabe ergibt sich erfindungsgemäß durch die kennzeichnenden Merkmale des Anspruchs 1.

Vorteilhafte Weiterbildungen der Erfindungergeben sich aus den Unteransprüchen.

Im folgenden wird ein Ausführungsbeispiel der Erfindung

Sta 1 Stl / 10.03.86

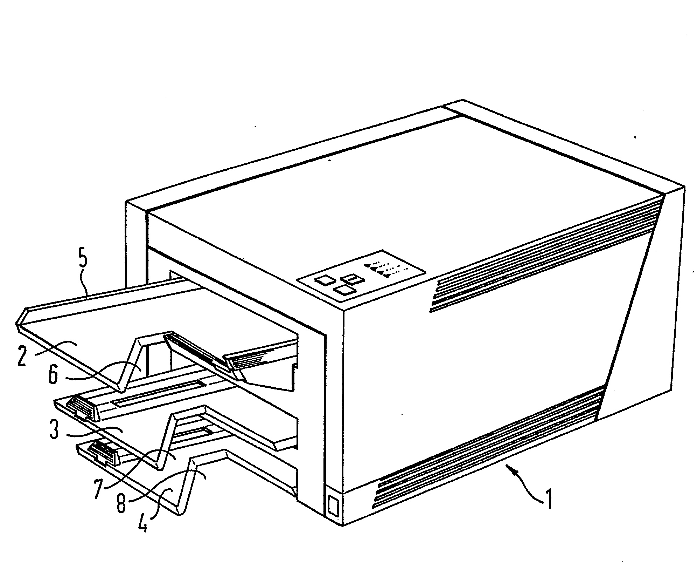

anhand der Zeichnung näher erläutert.

Die Figur zeigt ein im wesentlichen quaderförmiges Gehäuse 1  für eine Belegverarbeitungseinrichtung, zum
Beispiel für ein Formularlesegerät. An einer Schmalseite des Gehäuses 1  sind untereinander ein Eingabetisch 2
und zwei Ausgabefächer 3, 4  befestigt, wobei ein Teil
der Tisch- bzw. Fachfläche durch entsprechend angepaßte
Öffnungen in das Gehäuseinnere hineinreicht. Der Eingabetisch 2  weist an einer Längskante eine Anschlagleiste 5  auf, an der sich ein liegender Belegstapel seitlich abstützt. Die Größe der Belege liegt maximal bei
DIN A4  und minimal bei DIN A7  und ist dazwischen beliebig variierbar. An der der Anschlagleiste 5  gegenüberliegenden Längskante des Eingabetisches 1  ist eine
trapezartig geformte Aussparung 6  vorgesehen, die als
Sicht- und Grifföffnung dient. Die Ablagefächer 3, 4
weisen ebenfalls entsprechend geformte Aussparungen
7, 8  auf. Alle Aussparungen 6, 7, 8  reichen so weit
nach innen, daß auch kleinformatige Belege, zum Beispiel
der Größe DIN A7  noch beidseitig von Hand erfaßt werden
können. Gleichzeitig dienen diese Aussparungen als Sicht-
-fenster, indem sie der Bedienerperson, die das Gerät
schräg von oben betrachtet, den Blick auf im ersten oder
zweiten Ablagefach 3, 4  abgelegte Belege bis zur Größe
DIN A7  freigeben.

3 Patentansprüche

1 Figur

Bezugszeichenliste

1    Gehäuse

2    Eingabetisch

3,4   Ausgabefächer

5    Anschlagleiste

6    Aussparung im Eingabetisch

7,8   Aussparungen in den Ausgabefächern

## Patentansprüche

1. Belegverarbeitungseinrichtung für Belege unterschiedlichen Formats mit einem Eingabetisch für einen liegenden, von einem seitlichen Anschlag geführten Belegstapel und wenigstens zwei unterhalb des Eingabetisches angeordneten tablettartig ausgebildeten Ausgabefächern, d a d u r c h   g e k e n n z e i c h n e t , daß sowohl der Eingabetisch (2) als auch die Ausgabefächer (3, 4) an der dem seitlichen Anschlag (5) gegenüberliegenden Längskante je eine wenigstens bis in die Tisch- bzw. Fachmitte reichende Aussparung (6, 7, 8) aufweisen, die als Sicht- und Grifföffnung dient.

2. Belegverarbeitungseinrichtung nach Anspruch 1, d a d u r c h   g e k e n n z e i c h n e t , daß die Aussparung (6, 7, 8) eine trapezähnliche Form hat, derart, daß sich die Aussparung zur Tisch- bzw. Fachmitte hin keilförmig verjüngt.

3. Belegverarbeitungseinrichtung nach Anspruch 1 oder 2, d a d u r c h   g e k e n n z e i c h n e t , daß die Aussparung (6, 7, 8) so groß gewählt ist, daß ein bereitgestellter bzw. abgelegter Beleg minimaler Größe noch in die Aussparung hineinreicht.

| | EINSCHLÄGIGE DOKUMENTE | | EP 87103428.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE - B2 - 2 607 455 (VAN DYK)<br><br>* Fig. 2; Spalte 4, Zeilen 21-24 *<br><br>---- | 1-3 | B 65 H 31/20<br>B 65 H 31/22 |

RECHERCHIERTE
SACHGEBIETE (Int. Cl.4)

B 65 H
B 41 L
B 41 J
G 06 K

Der vorliegende Recherchenbericht wurde für alle Patentansprüche erstellt.

| Recherchenort | Abschlußdatum der Recherche | Prüfer |
|---|---|---|
| WIEN | 21-05-1987 | SÜNDERMANN |